# EUROPEAN PATENT SPECIFICATION

(11) **EP 3 024 792 B1**
(45) Date of publication and mention of the grant of the patent: **06.09.2017**
(21) Application number: 14744969.8
(22) Date of filing: 11.06.2014
(51) Int. Cl.: C03C 21/00

(54) **METHOD OF REFINING SILICA-SODIUM-CALCIUM GLASS SURFACE WITH ALUMINIUM COMPOUNDS**
VERFAHREN ZUR VERFEINERUNG DER NATRIUM-CALCIUM-SILIKATGLASOBERFLÄCHE MIT ALUMINIUMVERBINDUNGEN
MOYEN DE RAFFINAGE D'UNE SURFACE DE VERRE À BASE DE SILICIUM-SODIUM-CALCIUM AVEC DES COMPOSÉS D' ALUMINIUM

(30) Priority: 11.06.2013 PL 40429213
(43) Date of publication of application: 01.06.2016
(73) Proprietor: Opas, Piotr, 51-658 Wroclaw (PL); Wasylak, Jan, 31-444 Kraków (PL)
(72) Inventor: Opas, Piotr, 51-658 Wroclaw (PL); Wasylak, Jan, 31-444 Kraków (PL)
(74) Representative: Tabor-Kmiecik, Katarzyna
(86) International application number: PCT/PL2014/000062
(87) International publication number: WO 2014/200371

(56) References cited:
- WO-A1-2012/053919
- PL-B1- 202 940

## Description

The subject of this invention is a method of refining silica-sodium-calcium glass with aluminium compounds, pertaining to the production of basically flat items of surface modified by surface ionic exchange technology.

The glass surface modification method meaning ionic exchange is directed at obtaining favourable compressive stresses in the surface layers. As a result of larger diameter ions being exchanged into those of smaller radii, apart from a change in the chemical composition, the thermal expansion coefficient is also lowered and, as an effect of that, favourable stress system is obtained when the glass is annealed to cool the product to ambient temperatures. There are ways of refining silica-sodium-calcium glass with aluminium compounds which, when applied on a hot glass surface of temperature within the transformation range from 450 to 700°C, get decomposed forming the oxide film. At the same time, the metal oxide is diffused to surface layers and structural bonds, favourable to mechanical properties, such as smoothness, hardness and impact strength, are formed.

Particularly good results for sodium-calcium-silicate glasses have been obtained using aluminium compound of a size reduced to nanoparticles whose developed surface means very good adsorption properties. The way presented in the patent specification PL 202940 means applying nanopowder of an aluminium compound (aluminium - hydroxide AI(OH)₃ of particle size from 1 to 100 nm at best) on the glass surface and, then, exposing the product to thermal treatment within the range of transformation temperature values 580 +-150°C, yet not exceeding the deformation temperature. Nanopowder can be applied on a hot surface directly after the product has been formed, or during the formation process, but it can also be applied on cold surfaces of the formed product and then be heated to temperature values around the glass transformation temperature. The process of nanoparticle diffusion takes place during the product annealing phase. A transient layer is formed on the product surface forming a strongly chemically bound glass truss in which aluminium ions exist in favourable octaedric coordination.

Modification of sodium-calcium-silicate glasses with aluminium compounds according to PL 202940 technology leads to the growth of the glass micro-hardness by approx. 70%, transverse bending strength by approx. 35%, dynamic bending by 30%, increased resistance to scratches and better hydrolytic class as per PN-ISO719 - from HC3 to HC2. Light transmittance is not worsened.

The aim of the invention is further improvement of glass parameters superficially modified with aluminium compounds nanopowder. The method according to the invention and similarly as in the solution according to PL 202940 described above, means the application of aluminium compound nanopowder of 1-120 nm granulation, preferably Al(OH)₃ nanopowder, on a cold surface of the formed product and then performing heat treatment, including: heating up and holding the product at a transformation temperature range 580 +/- 150°C, not exceeding the deformation temperature, and, final annealing of the product to temperature values below 200°C. The core of the invention is that before applying nanopowder the surfaces of the formed product are activated by dealkalization in a distilled water bath of temperature 80 to 100°C, for a period from 15 to 60 minutes. Nanopowder can be applied by dusting from gaseous phase, or spraying from liquid phase. It is preferably to use the nanopowder screen printing method in a water or alcohol solution.

Surface de-alkalization in distilled water bath improves conditions for aluminium ion penetration into discontinuities of the spatial silica-oxygen matrix of the superficial layer. Presence of water within tops of the cracks hydrolyses silicates in these microzones, facilitating access and incorporation of aluminium ions in the refining process taking place by turn.

Description of the method being the subject of the invention is similar to the production of vehicle glass.

The external sheet of a multi-layer vehicle glass was made from flat sodium-calcium-silicate glass produced in the float technology, cut and bent adequately to the required shape and profile. Then the semi-product underwent de-alkalization in 85°C distilled water bath for 45 minutes. The process of refining the glass sheet surface constituting external surfaces of the glass included uniform spraying of the surface with Al(OH)₃ nanopowder of approx. 80 nm granulation, putting the sheet into a chamber furnace where heat treatment takes place at 650°C and then the sheet is transported to an annealing furnace where, in its segments, it is cooled to the inlet temperature being approx. 150°C. The temperature program of the annealing furnace imposed a duration period of 17 minutes for the sheet to be held within a 500 - 600°C temperature range, which caused complete incorporation of aluminium ions in the silica-oxygen matrix of the superficial layer. Apart from significantly improved mechanical and chemical properties, the refined surface got better hydrophobic characteristics.

## Claims

1. A method of refining the sodium-calcium-silicate glass surface with aluminium compounds by applying an aluminium compound nanopowder of 1 - 120 nm granulation on a cold surface of the formed product and then performing a heat treatment, which includes heating up and keeping at a transformation temperature range of 580 ± 150°C, not exceeding the deformation temperature and final annealing to temperature values below 200°C, **characterised in that** before applying the aluminium compound nanopowder the surfaces of the formed product are activated by dealkalization in a distilled water bath of temperature within a range from 80 to 100°C, for a time period from 15 to 60 minutes.

2. The method according to claim 1, **characterised in that** the aluminium compound nanopowder is an Al(OH)₃ nanopowder.

3. The method, according to claim 1 or 2, **characterised in that** the aluminium compound nanopowder is applied by means of dusting from gaseous phase, or spraying from liquid phase.

4. The method according to claim 3, **characterised in that** the aluminium compound nanopowder is applied by using the silk-screen printing method with the nanopowder in a water or alcohol solution.

## Patentansprüche

1. Ein Verfahren zur Verfeinerung der Natrium-Calcium-Silikat-Glasoberfläche mit Aluminiumverbindungen durch das Aufbringen eines Aluminiumverbindungs-Nanopulvers von 1 bis 120 nm Granulierung auf eine kalte Oberfläche des geformten Produkts und anschließendes Durchführen einer Wärmebehandlung, die das Aufheizen und im Umwandlungstemperaturbereich von 580 ± 150°C zu halten umfasst, der die Verformungstemperatur nicht überschreitet, und die endgültige Kalibrierung auf Temperaturwerte unter 200 °C, **ist dadurch gekennzeichnet, dass** vor dem Auftragen des Aluminiumverbindungs-Nanopulvers die Oberflächen des gebildeten Produktes durch Dealkalisierung in destilliertem Wasserbad, mit einer Temperatur im Bereich von 80 bis 100°C für einen Zeitraum von 15 bis 60 Minuten aktiviert werden.

2. Das Verfahren ist laut Behauptung 1, **dadurch gekennzeichnet, dass** das Aluminiumverbindungs-Nanopulver ein Al(OH)₃ - Nanopulver umfasst.

3. Das Verfahren ist laut Behauptung 1 oder 2, **dadurch gekennzeichnet, dass** das Aluminium-Verbund-Nanopulver mittels Abstauben aus der Gasphase oder Sprühen aus der Flüssigphase aufgetragen wird.

4. Das Verfahren ist laut Behauptung 3, **dadurch gekennzeichnet, dass** das Nanopulver der Aluminiumverbindung unter Verwendung des Siebdruckverfahrens mit dem Nanopulver in einer Wasser - oder Alkohollösung aufgetragen wird.

## Revendications

1. Une méthode de raffinage de la surface de verre au silicate de sodium et de calcium avec des composés d'aluminium par l'application d'une nanopoudre de composé d'aluminium de granulation de 1 à 120 nm sur une surface froide du produit formé, puis en effectuant un traitement thermique comprenant le réchauffement et le maintien d'une température de transformation de 580 ± 150° C, sans dépasser la température de déformation et enfin, en effectuant le recuit final à une température inférieure à 200° C, **caractérisée par le fait qu'**avant d'appliquer la nanopoudre de composé d'aluminium, les surfaces du produit formé sont activées par désalcalinisation dans un bain d'eau distillé à une température allant de 80 à 100 ° C, et ce, pendant un intervalle de 15 à 60 minutes.

2. Méthode conforme à la revendication 1, **caractérisée par le fait que** la nanopoudre de composé d'aluminium comprend de la nanopoudre Al(OH)3.

3. Méthode conforme à la revendication 1 ou 2, **caractérisée par le fait que** la nanopoudre de composé d'aluminium est appliquée au moyen de poudrage à partir de la phase gazeuse ou de pulvérisation à partir de la phase liquide.

4. Méthode conforme à la revendication 3, **caractérisée par le fait que** la nanopoudre de composé d'aluminium est appliquée en utilisant le procédé d'impression sérigraphique avec la nanopoudre dans une solution à l'eau ou à l'alcool.
